# EUROPEAN PATENT APPLICATION

(11) **EP 1 235 199 A2**
(43) Date of publication of application: **28.08.2002**
(21) Application number: 02001081.5
(22) Date of filing: 22.01.2002
(51) Int. Cl.: G09G 3/36

(54) **LCD and driving method thereof**

(30) Priority: 26.02.2001 KR 2001009672
(71) Applicant: SAMSUNG ELECTRONICS CO., LTD., Suwon-City, Kyungki-do (KR)
(72) Inventor: Kim, Young-Ki, Hwasung-kun, Kyungki-do (KR)
(74) Representative: Modiano, Guido, Dr.-Ing.

(57) **Abstract**

There are provided an LCD and a driving method thereof for charging each data line of the LCD with sufficient data voltage. The present invention has a switching device installed between every adjacent data line, and the switching device shorts the data line before a gate-on voltage is applied to the gate line thereby pre-charging the data line by charge sharing effect by shorting the adjacent data line and significantly reducing the change of the data line voltage by parasitic capacitance.

## Description

### (a) Field of the Invention

The present invention relates to a liquid crystal display and a driving method thereof, and more specifically, to a thin film transistor liquid crystal display and a driving method thereof.

### (b) Description of the Related Art

A thin film transistor liquid crystal display (TFT-LCD) is a display apparatus for displaying desired images by forming an electric field on a layer of liquid crystals injected between two substrates, and controlling the amount of light transmitted through the substrates by means of controlling the intensity of the electric field. The TFT-LCD is popular as a display to replace the widely used cathode ray tube (CRT) because of its power consumption, thinness, and high resolution, etc.

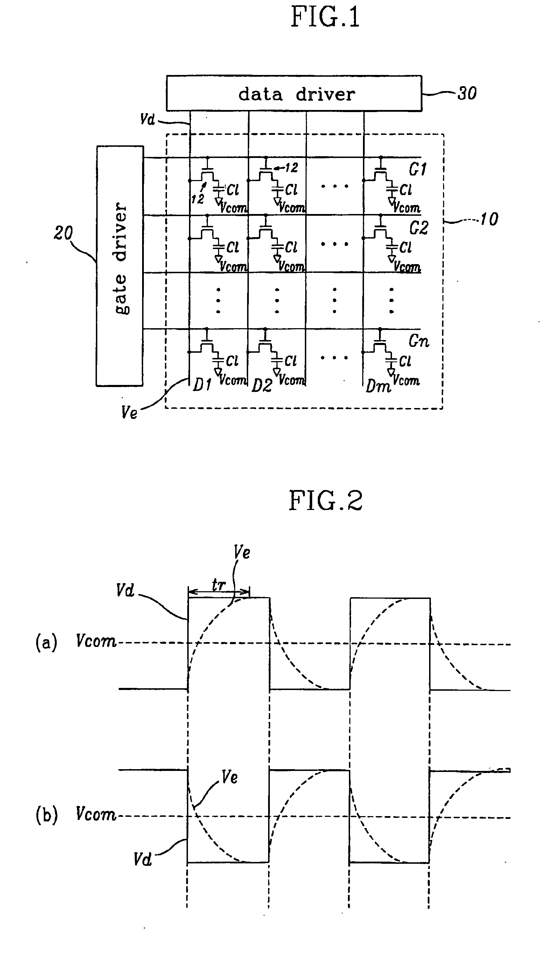

FIG. 1 is a representation of a TFT-LCD configuration with a circuit diagram. As shown in FIG. 1, the TFT-LCD comprises a liquid crystal panel 10, a gate driver 20, and a data driver 30.

The liquid crystal panel 10 comprises a plurality of gate lines (G1, G2, ...., Gn) and a plurality of insulated data lines (D1, D2, ....., Dm) crossing the gate lines, and there are a plurality of TFTs 12, each TFT area (pixel) surrounded by a gate line and a data line. A gate electrode, a source electrode, and a drain electrode of the TFT are connected to a gate line, a data line, and a pixel electrode (not shown) respectively.

The gate driver 20 applies a gate voltage to the gate line to turn the TFT on/off. The gate-on voltage is sequentially applied to the gate lines of the liquid crystal panel, and accordingly, the TFTs connected to the gate lines, which the gate-on voltage is applied on, turn on. The data driver 30 applies a data voltage for image signals to each data line.

The TFT-LCD is operated by applying the gate-on voltage to the gate electrode connected to the desired gate line so as to switch on the TFT, and by applying the data voltage for an image signal to the source electrode through the data line so that the data voltage reaches the drain electrode. The data voltage is transmitted to the pixel electrode, and an electric field is formed by a potential difference between the pixel electrode and the common electrode. The intensity of the electric field is controlled by the amount of data voltage, and the amount of light transmitted through the substrate is controlled by the intensity of the electric field.

But with enlargement of the TFT-LCD and parasitic capacitance of each data line, the data voltage to be applied to the data lines as shown in FIG. 2 is not enough to charge the data lines.

FIGs. 2 (a) and (b) show the wave forms of data voltage (Vd) applied to odd data lines and even data lines, and of voltage (Ve) charged to the data lines. As shown in FIGs. 2 (a) and (b), the data voltage (Vd) applied from the data driver 30 is significantly changed by the parasitic capacitance element from the voltage (Ve) actually charged to the data lines. That is, it takes a significant amount of time (tr) to charge the data lines with a predetermined voltage, and therefore, each pixel cannot be charged with enough data voltage.

### SUMMARY OF THE INVENTION

The present invention is directed to provide an LCD and a driving method thereof in order to solve the above problems.

One object of the present invention is to provide an LCD for charging each data line of the LCD with sufficient data voltage, and a driving method thereof.

In one aspect of the present invention, a liquid crystal display comprises: a liquid crystal panel comprising a plurality of gate lines, a plurality of insulated data lines crossing the gate lines, and a plurality of first thin film transistors each having a gate electrode connected to a gate line and a source electrode connected to a data line; a gate driver for sequentially supplying a gate-on voltage to the gate lines for turning on the thin film transistors; a data driver for applying a data voltage to the data lines; a data line shared switch having a plurality of switching devices for switching on the adjacent data lines with located on adjacent data lines; and a shared signal generator for outputting a shared control signal for turning on the switching devices.

The data line shared switch may be formed on the liquid crystal panel. Preferably, the data line shared switch can be placed on an end of the liquid crystal panel in a location opposite the data driver.

In another aspect of the present invention, a method of driving a liquid crystal display comprising a plurality of gate lines, a plurality of insulated data lines crossing the gate lines, and a plurality of thin film transistors, each having a gate electrode connected to a gate line and a source electrode connected to a data line, the driving method comprises the steps of: sequentially supplying a gate-on voltage for turning on the thin film transistor to the gate lines; shorting the adjacent data lines and charging the data lines with a predetermined voltage; and applying the data voltage to the data lines.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIG. 1 is a representation showing a configuration of a TFT-LCD;
FIG. 2 shows waveforms of voltages applied to a conventional data line;
FIG. 3 is a representation showing a configuration of an LCD according to a first embodiment of the present invention;
FIG. 4 shows waveforms of voltages applied to a data line according to the first embodiment of the present invention;
FIG. 5 is a graphical representation of a shared control signal according to the first embodiment of the present invention;
FIG. 6 is a graphical representation of a shared control signal according to a second embodiment of the present invention; and
FIG. 7 is a representation showing a configuration of an LCD according to the second embodiment of the present invention.

### DETAILED DESCRIPTION OF THE PREFERRED EMBODIMENTS

In the following detailed description, only the preferred embodiments of the invention have been shown and described, simply by way of illustration of the best modes contemplated by the inventor(s) of carrying out the invention. As will be realized, the invention is capable of modification in various obvious respects, all without departing from the invention. Accordingly, the drawings and description are to be regarded as illustrative in nature, and not restrictive.

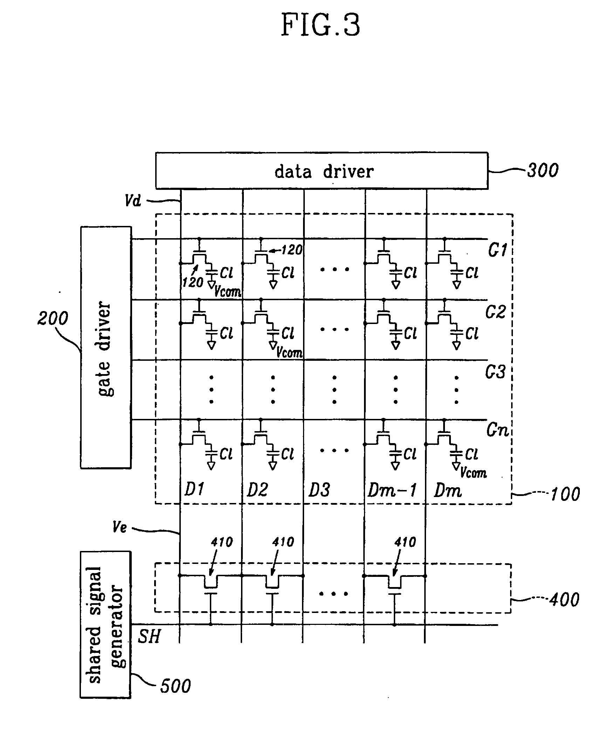

FIG. 3 shows a configuration of an LCD according to a first embodiment of the present invention

As shown in FIG. 3, the LCD according to the first embodiment of the present invention comprises a liquid crystal panel 100, a gate driver 200, a data driver 300, a data line shared switch 400 and a shared signal generator 500.

The liquid crystal panel 100 comprises a plurality of gate lines (G1, G2, ...., Gn) and a plurality of data lines (D1, D2, ...., Dm). There are a plurality of TFTs 120, a TFT being placed in each area (pixel) surrounded by the gate line and the data line. A gate electrode, a source electrode, and a drain electrode of each TFT are connected to a gate line, a data line, and a pixel electrode respectively. A liquid crystal material is provided between the pixel electrode and a common electrode (not shown). In FIG. 3, the liquid crystal material between the two electrodes is shown as a liquid crystal capacitor (Cl), and the common voltage applied on the common electrode is shown as Vcom.

The gate driver 200 applies a gate voltage to the gate line to turn the TFT on/off. The gate-on voltage is sequentially applied to the gate lines of the liquid crystal panel, and accordingly, the TFT connected to the gate line on which the gate-on voltage is applied turns on. The data driver 300 applies data voltages for image signals to each data line.

The data line shared switch 400 comprises a plurality of switching devices 410 for switching adjacent data lines according to a control signal. In the first embodiment of the present invention, the liquid crystal panel 100 and the data line shared switch 400 are illustrated separately in the drawings for the convenience of explanation, but the data line shared switch 400 can be placed on the liquid crystal panel 100, or it can be provided separately. In the case that the data line shared switch 400 is placed on the liquid crystal panel 100, the data line shared switch 400 is preferably provided on one end of the liquid crystal panel 100.

In the embodiment of the present invention, a transistor 410 is used as the switching device. It is preferable to use a thin film transistor in the case of placing the switching device 410 on the liquid crystal panel 100. In this case, an amorphous transistor or poly-crystal transistor can be used as the thin film transistor. In particular, the employment of an amorphous thin film transistor has an advantage of simplifying fabrication processes because it can be fabricated in the same process as the TFT 120 connected to the pixel electrode.

Adjacent data lines (for example, D1, D2) are connected to the source electrode and the drain electrode of each transistor 410, and a control signal (SH) is applied to the gate electrode.

A shared signal generator 500 outputs a control signal (SH) for turning on the switching device of the data line shared switch 400, and the control signal (SH) is applied to the gate electrode. The shared signal generator 500 outputs the control signal for turning on the switching device 410 right before a gate-on voltage is applied to each gate line.

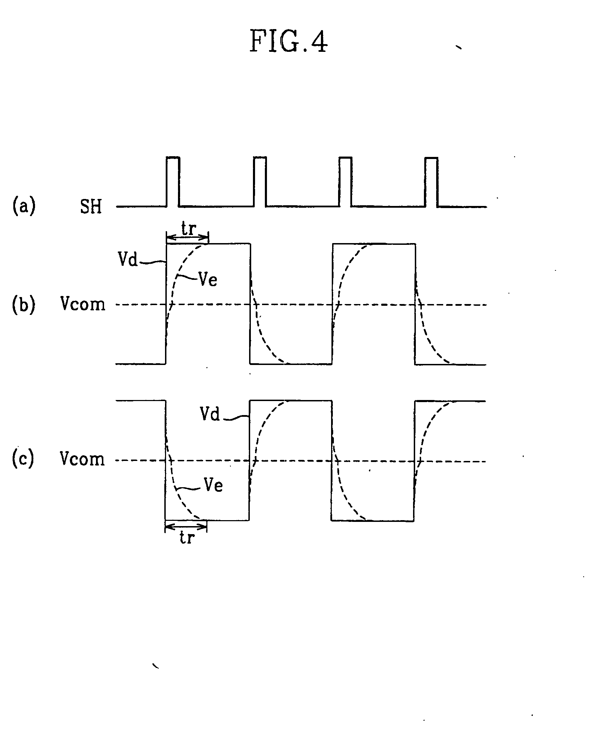

Now referring to FIG. 4, the driving method of the liquid crystal display according to the first embodiment of the present invention is described.

FIG. 4(a) shows waveforms of a shared control signal (SH) which is output from the shared signal generator 500, and FIG. 4(b) and (c) show wave forms of voltages that are applied to odd data lines and even data lines respectively. Voltage (Vd) of FIGs. 4(b) and (c) shows the voltage applied to the data lines from the data driver 300, and voltage (Ve) of FIG. 4(b) and (c) shows the voltage charged to the data lines.

The first embodiment of the present invention employs dot reverse driving in which the data voltage for a common voltage (Vcom) is reversed for each pixel, and therefore the polarity of the data voltages applied to the adjacent data lines (for example, D1, D2...) is opposite for each. That is, in the case that a positive data voltage (larger than the common voltage) is applied to the odd data lines as shown in FIGs. 4(b) and (c), a negative data voltage (smaller than the common voltage) is applied to the even data lines.

According to the first embodiment of the present invention, right before applying a gate-on voltage to each gate line, adjacent data lines are shorted for a predetermined time by turning on the switching device 410 of the data line common switch 400. Then, by the charge sharing effect between the data lines charged with data voltages having polarities different from each other, the voltage of the data lines becomes close to a common voltage (Vcom), which is in the middle of swing voltages. Therefore, according to the first embodiment of the present invention, the data lines can be sufficiently charged with a predetermined data voltage because the voltages are higher and lower around the common voltage (Vcom). As shown in FIGs. 4(b) and (c), the data lines can be sufficiently charged with a predetermined voltage because the time (tr) required to charge the data lines with a predetermined voltage, can be reduced compared to the conventional case. Therefore, according to the present invention, the voltage change in the data lines that is increased far from the data driver, can be improved.

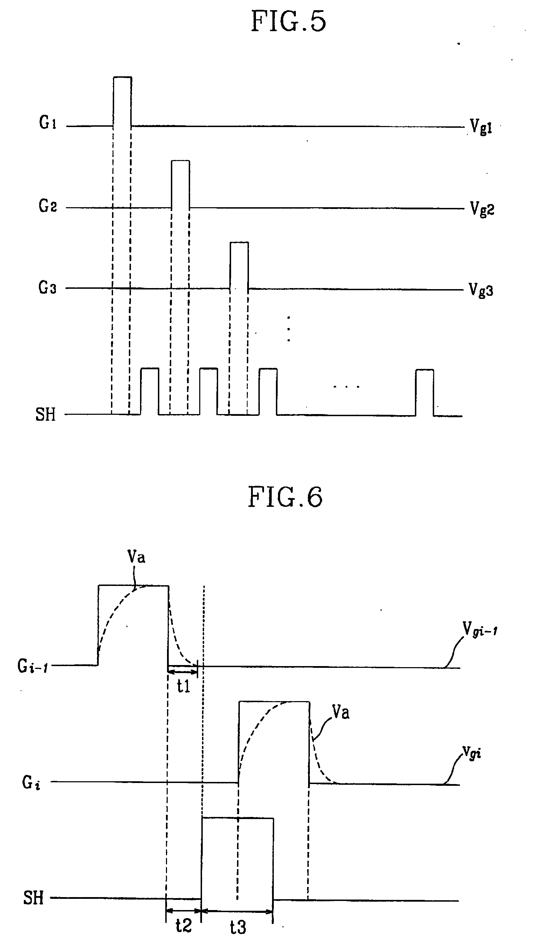

FIG. 5 shows one example of the shared control signal (SH) used in the embodiment of the present invention.

As shown in FIG. 5, there exists a shared signal pulse (SH) for stopping sharing of the data lines of the voltage between the gate-on voltages applied on the adjacent gate lines. In this case, after a previous gate line (for example, G1) turns to a gate-off voltage, two data lines are shared by the shared signal pulse, and after stopping the data lines from sharing, the gate-on voltage is applied to a desired gate line (G2).

As shown in FIG. 5, since a shared signal pulse exists between the gate-on voltage applied to two adjacent gate lines, the interval of shared signal pulses can be reduced in the case that the difference between two gate-on voltages is decreased. Therefore, the charge sharing between data lines may not sufficiently occur.

FIG. 6 shows another example of the wave forms of a shared control signal (SH) used in the embodiment of the present invention.

According to the shared control signal as shown in FIG. 6, a shared signal pulse is applied after a previous gate line (Gi-1) turns to a gate-off voltage, and the shared signal pulse is maintained for a predetermined time after a selected gate line (Gi) becomes a gate-on voltage. By the method above, a sufficient interval between the shared signal pulses is achieved even though the interval between the two gate-on voltages is decreased.

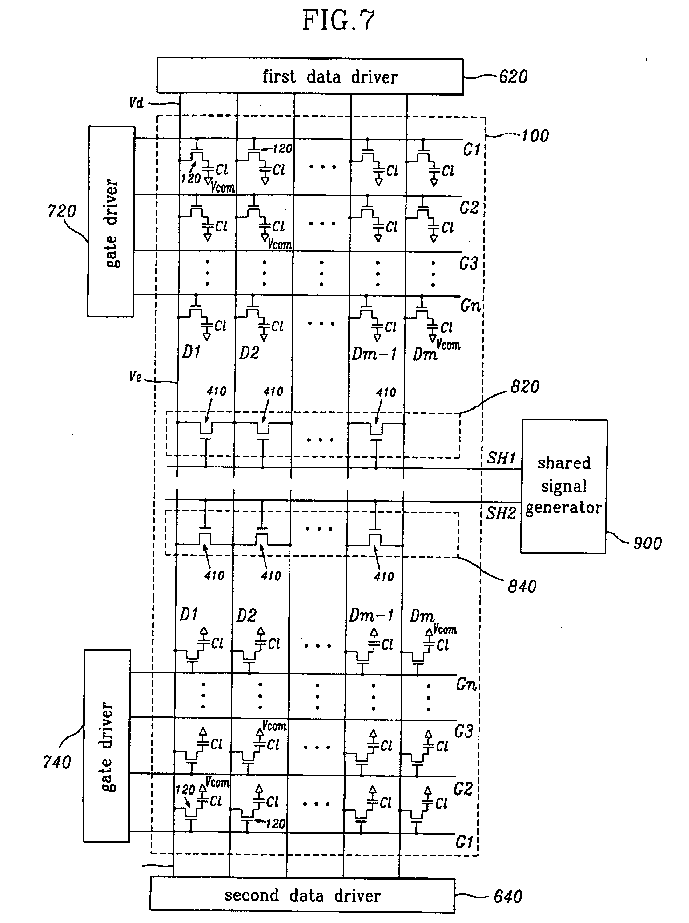

In addition to the driving of a single driver in the first embodiment of the present invention as above, a dual driver can also be used as illustrated in FIG. 7.

FIG. 7 is a schematic representation of an LCD according to a second embodiment of the present invention.

The configuration and operation of the LCD of the second embodiment of the present invention are almost the same as the first embodiment, and an explanation of duplicate parts is omitted.

In the second embodiment of the present invention, data line shared switches 820 and 840 are placed on the middle part of the liquid crystal panel 100, and a shared signal generator 900 outputs a shared control signal (SH1, SH2) for switching the switching device 410 of the shared switches 820, 840 on/off.

While this invention has been described in connection with what is presently considered to be the most practical and preferred embodiment, it is to be understood that the invention is not limited to the disclosed embodiments, but, on the contrary, is intended to cover various modifications and equivalent arrangements included within the spirit and scope of the appended claims.

For example, a transistor is used as a switching device in the embodiment of the present invention but other kinds of switching devices can be used as well.

As described above, according to the present invention, the data lines can be sufficiently charged with a data voltage by sharing the two adjacent data lines right before applying a gate-on voltage and therefore, maintaining the voltage of the data lines within a predetermined value of a common voltage.
where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A liquid crystal display comprising:
a liquid crystal panel comprising a plurality of gate lines, a plurality of insulated data lines crossing the gate lines, and a plurality of first thin film transistors each having a gate electrode connected to a gate line and a source electrode connected to a data line;
a gate driver for sequentially supplying a gate-on voltage to the gate lines for turning on the thin film transistors;
a data driver for applying a data voltage to the data lines;
a data line shared switch having a plurality of switching devices, each of which formed on the adjacent data lines, for switching on adjacent data lines; and
a shared signal generator for outputting a shared control signal for turning on the switching devices.

2. The liquid crystal display according to claim 1, wherein the data line shared switch is formed on the liquid crystal panel.

3. The liquid crystal display according to claim 2, wherein the switching devices are second thin film transistors.

4. The liquid crystal display according to claim 3, wherein the second thin film transistors are manufactured by the same process as the first thin film transistor.

5. The liquid crystal display according to any one of claims 2 to 4, wherein the data line shared switch is placed on an end of the liquid crystal panel in a location opposite the data driver.

6. The liquid crystal display according to any one of claims 1 to 4, wherein the shared signal generator applies a shared signal pulse for sharing the data lines between the gate-on voltages applied to adjacent gate lines respectively.

7. The liquid crystal display according to any one of claims 1 to 4, wherein the shared signal generator applies a shared signal pulse for sharing the data lines after the voltage applied to the previous gate lines turns to a gate-off voltage, and after a gate-on voltage is applied to the gate line, the shared signal pulse is maintained for a predetermined time.

8. A method of driving a liquid crystal display comprising a plurality of gate lines, a plurality of insulated data lines crossing the gate lines, and a plurality of thin film transistors, each having a gate electrode connected to a gate line and a source electrode connected to a data line, the driving method comprising the steps of:
a) sequentially supplying a gate-on voltage for turning on the thin film transistor to the gate lines;
b) shorting the adjacent data lines and charging the data lines with a predetermined voltage; and
c) applying the data voltage to the data lines.

9. The driving method of a liquid crystal display according to claim 8, wherein the b) step is to short the data lines between an interval of the gate-on voltages applied to adjacent gate lines respectively.

10. The driving method of a liquid crystal display according to claim 8, wherein the b) step is to short the data lines after the voltage applied to a previous gate line is changed to a gate-off voltage, and to cancel the short of the adjacent data lines in a predetermined time after the gate-on voltage is applied to the gate line.
